# EUROPÄISCHE PATENTSCHRIFT

(11) **EP 2 987 058 B1**
(45) Veröffentlichungstag und Bekanntmachung des Hinweises auf die Patenterteilung: **12.06.2019**
(21) Anmeldenummer: 14717754.7
(22) Anmeldetag: 14.04.2014
(51) Int. Cl.: G06F 3/0346

(54) **VERFAHREN ZUR AUSWAHL EINER INFORMATIONSQUELLE ZUR ANZEIGE AUF EINER DATENBRILLE**
METHOD FOR SELECTING AN INFORMATION SOURCE FOR DISPLAY ON DATA SPECTACLES
PROCÉDÉ DE SÉLECTION D'UNE SOURCE D'INFORMATION À AFFICHER SUR UNE PAIRE DE LUNETTES INTELLIGENTES

(30) Priorität: 19.04.2013 DE 102013207064
(43) Veröffentlichungstag der Anmeldung: 24.02.2016
(73) Patentinhaber: Bayerische Motoren Werke Aktiengesellschaft, 80809 München (DE)
(72) Erfinder: ENDERS, Martin, Dr., 82041 Deisenhofen (DE); KLANNER, Felix, Dr., 639664 Singapore (SG); SPIESSL, Wolfgang, Dr., 85276 Pfaffenhofen (DE)
(86) Internationale Anmeldenummer: PCT/EP2014/057542
(87) Internationale Veröffentlichungsnummer: WO 2014/170280

(56) Entgegenhaltungen:
- WO-A1-2012/011893
- US-A1- 2011 080 289
- US-B1- 8 184 067
- US-B1- 8 223 024

## Beschreibung

Die Erfindung betrifft Verfahren zum Auswählen einer Informationsquelle aus einer Mehrzahl von Informationsquellen zur Anzeige auf einer Anzeige einer Datenbrille, eine entsprechende Vorrichtung und ein entsprechendes Computerprogramm.

Heutzutage sind Datenbrillen, manchmal auch Head-mounted Displays, bekannt, die eine Anzeige umfassen. Eine Datenbrille wird durch einen Benutzer ähnlich einer gewöhnlichen Brille, die als Sehhilfe verwendet wird, auf dem Kopf getragen. Die Anzeige der Datenbrille befindet sich dabei im Sichtfeld des Trägers. Manche Datenbrillen umfassen eine Anzeige nur für ein Auge, andere Datenbrillen umfassen zwei Teilanzeigen, wobei jedem Auge eine Teilanzeige zugeordnet ist.

Weiterhin ist es bekannt, dass Datenbrillen eine halbtransparente Anzeige umfassen können. Eine solche Anzeige ermöglicht es dem Träger sowohl angezeigte Informationen als auch das Umfeld hinter der Anzeige zu erkennen. Diese Art an Anzeige ist besonders gut zur kontaktanalogen Darstellung von Informationen geeignet. Bei der kontaktanalogen Darstellung ist der anzuzeigenden Information ein Ort im Umfeld des Trägers zugeordnet und die Information wird diesem Ort zugeordnet angezeigt, manchmal auch als ortsrichtige Anzeige bezeichnet. Dies kann durch eine für den Träger scheinbare Überlagerung der Information über den zugeordneten Ort geschehen oder eine Darstellung der Information in räumlicher Nähe zu dem zugeordneten Ort, ggf. mit einem Symbol wie einer Linie, um auf den zugeordneten Ort zu deuten. Die Information selbst kann ebenfalls ein Symbol, ein Bild, Text oder ähnliches sein. Die kontaktanaloge Darstellung wird manchmal auch augmented reality genannt.

Darüber hinaus sind auch Datenbrillen bekannt, die eine nicht-transparente Anzeige umfassen. Auch bei diesen ist eine kontaktanaloge Darstellung möglich, wofür ein Videobild oder zumindest ein Kamerabild der Umgebung gemacht wird, in das dann die kontaktanaloge Darstellung eingearbeitet wird, also meist dem aufgenommenen Bild überlagert wird.

Es sind Datenbrillen bekannt geworden, deren Anzeige nicht im zentralen Sichtfeld des Trägers liegt. Das Sichtfeld und das zentrale Sichtfeld wird durch den Winkelbereich definiert, in dem Menschen typischerweise Gegenstände in ihrem Umfeld wahrnehmen können. Der Winkelbereich wird ausgehend von der zentralen Blickrichtung beim Geradeausschauen (der zentralen Position der Pupillen in Bezug zu den Augenhöhlen) bestimmt. Das zentrale Sichtfeld liegt innerhalb eines Winkelbereiches von 10°, 15°, 20° oder 25° von der zentralen Blickrichtung beim Geradeausschauen. Somit liegen Gegenstände des Umfelds nur dann im zentralen Sichtfeld, wenn sie sich innerhalb eines kegelförmigen Raumes des Umfelds um die zentrale Blickrichtung beim Geradeausschauen herum befinden. Das Sichtfeld, das nicht im zentralen Sichtfeld liegt, wird peripheres Sichtfeld genannt.

Datenbrillen, deren Anzeige nicht im zentralen Sichtfeld des Trägers liegt, sind im Vergleich zu Datenbrillen mit einer Anzeige im zentralen Sichtfeld weniger dazu geeignet, Informationen kontaktanalog darzustellen. Dies liegt daran, dass die Aufmerksamkeit und Wahrnehmung des Umfelds eines Menschen bei einer Tätigkeit eher auf das zentrale Sichtfeld ausgerichtet ist. Insofern wird die Aufmerksamkeit und Wahrnehmung des Umfelds also durch die Ausrichtung des gesamten Kopfes bestimmt. Durch eine andere Ausrichtung des Kopfes ist es nicht möglich das durch die Anzeige einer Datenbrille abgedeckte Sichtfeld des Trägers der Datenbrille zu verändern. Aus diesem Grund eigenen sich Datenbrillen deren Anzeigen nicht im zentralen Sichtfeld des Trägers liegen, sind wenig dazu geeignet, Informationen kontaktanalog darzustellen.

Das Dokument US 8,184,067 B1 offenbart eine Datenbrille mit Sensoren, die dazu eingerichtet ist, von einem Energiezustand in einen anderen Energiezustand überzugehen basierend auf den Sensormessungen.

Das Dokument US 8,223,024 B1 offenbart eine Datenbrille, mit der unnatürliche Bewegungen der Datenbrille einen Sperrmechanismus auslösen.

Das Dokument US 2011/0080289 A1 offenbart eine Datenbrille mit Sensoren, die ein Tragen oder Halten erfassen und abhängig davon Inhalte von einem Medienspieler anzeigt oder nicht.

Das Dokument WO 2012/011893 A1 offenbart Sensorarten in Datenbrillen.

Die Aufgabe der Erfindung ist es, die Verwendung von Datenbrillen, deren Anzeigen nicht im zentralen Sichtfeld des Trägers liegen, zu erweitern.

Diese Aufgabe wird durch die Gegenstände der unabhängigen Ansprüche gelöst. Vorteilhafte Weiterbildungen sind in den abhängigen Ansprüchen definiert.

In einem ersten Aspekt umfasst ein Verfahren zum Auswählen einer Informationsquelle aus einer Mehrzahl von Informationsquellen zur Anzeige der von der ausgewählten Informationsquelle bereitgestellten Informationen auf einer Anzeige einer Datenbrille wobei die Datenbrille in verschiedenen Ausrichtungen verwendet wird: Bestimmen der Ausrichtung der Datenbrille in Bezug auf den Kopf des Trägers der Datenbrille mithilfe von Mitteln zum Bestimmen der Ausrichtung der Datenbrille in Bezug auf den Kopf des Trägers der Datenbrille; Auswählen einer Informationsquelle aus der Mehrzahl von Informationsquellen zur Anzeige der von der ausgewählten Informationsquelle bereitgestellten Informationen abhängig von der bestimmten Ausrichtung der Datenbrille in Bezug auf den Kopf des Trägers der Datenbrille.

Derzeit sind Datenbrillen darauf ausgelegt, dass sie stets in einer Ausrichtung zum Kopf verwendet werden, also in einer Tragehaltung beziehungsweise Position sehr ähnlich der einer Sehhilfe getragen werden. Die Erfindung schlägt vor, eine Datenbrille in verschiedenen Ausrichtungen zu verwenden und dabei Informationsquellen abhängig von den Ausrichtungen zur Anzeige auszuwählen. Ebenso wie manche Brillenträger ihre herkömmliche Sehhilfenbrille in der Position verändern indem sie beispielsweise von einer Position in der Nähe der Nasenwurzel in Richtung der Nasenspitze geschoben wird ("Herunterziehen" der Brille) um bestimmte Informationen in der Nähe (beim Lesen) oder umgekehrt in der Ferne besser wahrnehmen zu können, können beim Herunterziehen der Datenbrille andere Informationen verfügbar gemacht werden, nämlich durch die Auswahl einer anderen Informationsquelle. Besonders vorteilhaft ist es hierbei für die heruntergezogene Datenbrille eine Informationsquelle auszuwählen, deren Informationen kontaktanalog angezeigt werden. Dies kann beispielsweise beim Suchen eines bestimmten Gebäudes, einer bestimmten Straße, einer bestimmten Person von Vorteil sein. Die Veränderung der Position der Datenbrille entspricht dabei dem Effekt, der durch das Verschieben einer herkömmlichen Sehhilfenbrille erzielt wird: Es werden andere Informationen verfügbar. Diese Analogie ermöglicht eine intuitive und leicht zu erlernende Funktionalität.

Besonders vorteilhaft ist das erfindungsgemäße Verfahren bei Datenbrillen, deren Anzeige nicht im zentralen Sichtfeld des Trägers liegt. Herkömmlicherweise eigenen sich diese Datenbrillen nicht dazu Informationen kontaktanalog anzuzeigen. Werden derartige Datenbrillen jedoch in ihrer Position verschoben, so kann deren Anzeige zumindest teilweise im zentralen Sichtfeld des Trägers liegen. Zumindest der im zentralen Sichtfeld der Anzeige liegende Teil eignet sich damit für die Anzeige von kontaktanalogen Informationen. Die Erfindung ermöglicht nun diese Änderung der Ausrichtung der Datenbrille zu erfassen und die Anzeige durch die Wahl einer anderen Informationsquelle auf eine kontaktanaloge Darstellung umzustellen. Auf diese Weise kann bei einer Datenbrille mit Anzeige, die in der typischen (oder ersten) Ausrichtung beziehungsweise Tragehaltung im peripheren Sichtfeld liegt, trotzdem die in vielen Fällen vorteilhafte Funktion einer kontaktanalogen Anzeige ermöglicht werden.

Eine Mehrzahl an Informationsquellen kann zwei, drei oder mehr Informationsquellen umfassen. Mit dem Begriff Anzeige der Datenbrille ist hier der Bereich der Datenbrille gemeint, in dem tatsächlich Informationen angezeigt werden können. Eine Informationsquelle stellt Informationen bereit, die dafür vorgesehen sind, auf einer Anzeige einer Datenbrille angezeigt zu werden. Eine Informationsquelle kann eine Videokamera mit Verarbeitungselektronik, ein Bordcomputer eines Fahrzeugs, ein Medienabspielgerät oder ähnliches sein. Die Informationsquellen der Mehrzahl der Informationsquellen können von demselben Computer bereitgestellt werden und sich dabei aber auf unterschiedliche von dem Computer ausgeführte Funktionen beziehen.

Die Ausrichtung in Bezug auf den Kopf des Trägers muss nicht die vollständige räumliche Beziehung angeben. Die Bestimmung der Ausrichtung kann auch nur die Bestimmung der Neigung der Datenbrille in Bezug auf den Kopf des Trägers umfassen.

In einer Weiterbildung umfasst die Datenbrille einen Abschnitt, der dazu ausgebildet ist, im Bereich eines Ohres des Trägers mit dem Ohr und/oder dem Kopf des Trägers in Kontakt zu treten, insbesondere einen Brillenbügel, und wobei dieser Abschnitt der Datenbrille Sensoren umfasst, die dazu ausgebildet sind, die relative Positionierung des Abschnitts zu einem Ohr des Trägers zu erfassen, wobei das Bestimmen der Ausrichtung der Datenbrille umfasst: Erfassen der relativen Positionierung des Abschnitts der Datenbrille zu einem Ohr des Trägers. Die Ausrichtung der Datenbrille kann also über den Kontakt des Gestells der Datenbrille, nämlich dem Bügel der Datenbrille, mit dem Träger erfasst werden. Dazu umfasst die Datenbrille Sensoren im Bügel. Ändert der Benutzer die Ausrichtung der Brille indem er sie beispielsweise von einer Position in der Nähe der Nasenwurzel in Richtung der Nasenspitze schiebt ("Herunterziehen" der Brille), verschiebt sich auch der Kontakt des Bügels mit dem Ohr des Trägers in Richtung des freien Endes des Bügels. Unter der Annahme, dass die Datenbrille weiterhin auf der Nase aufliegt, kann so auf die neue Ausrichtung der Datenbrille geschlossen werden. Gelegentlich kommt es im Praxiseinsatz dazu, dass Bügel einer Brille nicht korrekt am Ohr des Trägers aufliegen. Um auch in diesem Fall eine korrekte Funktion zu gewährleisten können die Sensoren besonders sensitiv eingestellt werden. Alternativ oder zusätzlich können in beiden Bügeln der Datenbrille Sensoren vorgesehen sein, so dass stets zwei Messungen vorliegen und bereits der Kontakt eines Bügels mit einem Ohr zur Ausrichtungsbestimmung ausreicht. Darüber hinaus kann dem Träger und Benutzer der Datenbrille ein Hinweis gegeben werden, dass zur besseren Erkennung der Ausrichtung der Brille und zur korrekten Auswahl der Informationsquelle, ein ausreichender Kontakt der Datenbrille mit den Ohren sicherzustellen ist. Dies kann vom Benutzer ganz einfach durch Aufdrücken auf die Bügel bei Ändern der Ausrichtung der Brille, also einem "Herunterziehen" der Brille, ausgeführt werden.

Die Sensoren können dazu ausgebildet sein, zu erfassen, an welcher Position der Abschnitt und das Ohr des Trägers in Kontakt sind, wobei das Erfassen der relativen Positionierung des Abschnitts der Datenbrille zu einem Ohr des Trägers umfasst: Erfassen, an welcher Position der Abschnitt und das Ohr des Trägers in Kontakt sind. Dazu können Sensoren mithilfe von kapazitiven Effekten die Nähe von Körperteilen messen (ähnlich der Funktionsweise von Touch Screens), ebenso können drucksensitive Sensoren zum Einsatz kommen. Denkbar wären auch lichtempfindliche Sensoren entlang des Bügels der Datenbrille, die eine Abschirmung von Streulicht durch das Ohr detektieren können.

In einer Weiterbildung umfasst das Auswählen einer Informationsquelle: Bestimmen eines Ausrichtungsbereiches aus einer Mehrzahl an Ausrichtungsbereichen, in dem die bestimmte Ausrichtung der Datenbrille liegt, Auswählen einer Informationsquelle aus der Mehrzahl der Informationsquellen anhand einer vorbestimmten Zuordnung zwischen den Ausrichtungsbereichen der Mehrzahl an Ausrichtungsbereichen und den Informationsquellen der Mehrzahl der Informationsquellen; wobei jeder Ausrichtungsbereich aus der Mehrzahl an Ausrichtungsbereichen, mögliche Ausrichtungen der Datenbrille in Bezug auf den Kopf des Trägers beschreibt, insbesondere Ausrichtungen, die bei einer Bewegung der Datenbrille nacheinanderfolgend eingenommen werden. Erfindungsgemäß wird es also ermöglicht, den Bereich zu bestimmen, in dem die erfasste bzw. bestimmte Ausrichtung der Datenbrille liegt. Falls beispielsweise die Ausrichtung der Datenbrille über die Position des Kontakts zwischen einem Abschnitt des Bügels der Datenbrille und dem Ohr bestimmt wird, kann einem Kontakt in einem ersten Teil des Abschnitts des Bügels stets eine erste Informationsquelle zugewiesen werden, einem Kontakt in einem zweiten Teil des Abschnitt des Bügels hingegen eine zweite Informationsquelle. Typischerweise sind der erste und der zweite Teil des Bügels jeweils zusammenhängend beziehungsweise kontinuierlich.

In einer Ausgestaltung ist die Anzeige der Datenbrille für den Träger der Datenbrille in einem ersten Ausrichtungsbereich der Datenbrille in Bezug auf den Kopf des Trägers im Wesentlichen in einem peripheren Sichtfeld des Trägers angeordnet. Gleichzeitig kann die Anzeige der Datenbrille für den Träger der Datenbrille in einem zweiten Ausrichtungsbereich der Datenbrille in Bezug auf den Kopf des Trägers zumindest mit einem signifikanten Teil in einem zentralen Sichtfeld des Trägers angeordnet sein. Auf diese Weise wird erfindungsgemäß ermöglicht, dass Datenbrillen mit Anzeigen im peripheren Sichtfeld des Trägers vorteilhaft auch zur kontaktanalogen Anzeige von Informationen verwendet werden können. Ein signifikanter Teil kann mehr als: 10%, 15%, 20%, 30%, 40%, 50%, 60%, 70%, 80%, 90% sein.

Die Datenbrille kann eine Kamera umfassen, die im Wesentlichen in Richtung der zentralen Blickrichtung ausgerichtet ist. Die Aufnahmen der Kamera können verwendet werden, um Objekte im Sichtfeld des Trägers zu identifizieren und deren Position im Sichtfeld des Trägers festzustellen, so dass eine kontaktanaloge Darstellung ermöglicht wird. Dabei kann die Ausrichtung der Datenbrille berücksichtigt werden, von der insbesondere die Neigung der Datenbrille in Bezug auf eine Horizontale berücksichtigt wird.

Die Mehrzahl an Informationsquellen kann eine erste Informationsquelle und eine zweite Informationsquelle umfassen, wobei die erste Informationsquelle erste Informationen bereitstellt, die nicht zur kontaktanalogen Darstellung vorgesehen sind, und wobei die zweite Informationsquelle zweite Informationen bereitstellt, die zur kontaktanalogen Darstellung vorgesehen sind, wobei das Verfahren ferner umfasst: Bestimmen, ob die Datenbrille in dem ersten oder dem zweiten Ausrichtungsbereich angeordnet ist; Wenn die Datenbrille in dem ersten Ausrichtungsbereich angeordnet ist: Darstellen der ersten Informationen auf nicht-kontaktanaloge Art; Wenn die Datenbrille in dem zweiten Ausrichtungsbereich angeordnet ist: Darstellen der zweiten Informationen auf kontaktanaloge Art. Informationen, die zur kontaktanalogen Darstellung vorgesehen sind, sind einem Ort im Umfeld des Trägers der Datenbrille zugeordnet. Ihre Position, an der sie in der Anzeige der Datenbrille angezeigt werden, wird derart bestimmt, dass sie dem Träger ortsrichtig erscheinen. Alternativ oder zusätzlich kann auch ein graphisches Element ortsrichtig angezeigt werden und gleichzeitig eine graphische Verbindung zu der ebenfalls angezeigten Information herstellt werden. Informationen, die nicht zur kontaktanalogen Darstellung vorgesehen sind, ist kein Ort im Umfeld des Trägers zugeordnet beziehungsweise die Informationen sollen nicht mit Bezug auf einen Ort im Umfeld angezeigt werden. Eine erste Informationsquelle kann beispielsweise eine Zentralsteuerung oder ein Bordcomputer sein, der als erste Informationen die die Uhrzeit, das Datum, die Geschwindigkeit des Fahrzeugs, die Drehzahl eines Antriebs des Fahrzeugs, die Leistungsabgabe des Antriebs des Fahrzeugs oder den Füllzustand des Energiespeichers des Fahrzeugs ausgibt. Eine zweite Informationsquelle kann beispielsweise ein Fahrerassistenzsystem sein, der als zweite Informationen die Markierung (beispielsweise ein Symbol) eines anderen Verkehrsteilnehmers, mit dem eine Kollision droht, und die Position der Markierung in der Anzeige der Datenbrille ausgibt. Ebenso kann als zweite Information die Markierung eines Fahrstreifens ausgegeben werden, der aufgrund einer Routenführung befahren werden sollte, und die entsprechende Position in der Anzeige. Gleichfalls kann ein sogenannter Point of Interest (POI) und die entsprechende Position in der Anzeige als zweite Informationen ausgegeben werden.

Das Verfahren kann ferner umfassen: Bestimmen der Position in der Anzeige der Datenbrille, an der die kontaktanaloge Informationen anzuzeigen ist, anhand der bestimmten Ausrichtung der Datenbrille, insbesondere unter Verwendung einer vorbestimmten Zuordnung zwischen Ausrichtungen der Datenbrille und einer jeweiligen Referenzposition in der Anzeige der Datenbrille. Über die Referenzposition in der Anzeige kann die Position der kontaktanalogen Information (vorhergehend auch die zweite Information genannt) in der Anzeige der Datenbrille bestimmt werden. Entsprechend den verschiedenen Möglichkeiten der Ausrichtung der Datenbrille ist es sinnvoll für jede der Ausrichtungen eine Referenzposition zu bestimmen oder zumindest auf der Basis von einzelnen vorhandenen Referenzpositionen zu berechnen (bspw. Interpolation). Auf diese Weise können dem Träger Informationen derart angezeigt werden, dass auch bei verschiedenen Ausrichtungen der Datenbrille die Informationen für den Träger kontaktanalog am korrekten Ort im Umfeld erscheinen.

Um eben die korrekte Position von Informationen in der Anzeige im Fall einer kontaktanlogen Darstellung ermitteln zu können, kann vorgesehen sein, zunächst eine Kalibrierungssequenz durchzuführen. In dieser werden dem Träger der Datenbrille Markierungen an verschiedenen Positionen in der Anzeige dargestellt und der Träger bringt die Datenbrille in die Ausrichtung, in der die Markierung ortsrichtig (also kontaktanalog) angezeigt wird, gegebenenfalls unter Beachtung der für ihn möglichen Ausrichtungen (beispielsweise muss die Datenbrille stets auf der Nase sitzen). Für die Kalibrierungssequenz können beispielsweise zehn Iterationen vorgesehen sein. Werden in der Verwendung der Datenbrille später Ausrichtungen erfasst, die zwischen den Ausrichtungen der Kalibrierung liegen, können die relevanten Parameter (insbesondere die Referenzposition in der Anzeige) interpoliert werden. Mit anderen Worten: Das Verfahren kann ferner umfassen: Ausführen einer Kalibrierungssequenz für eine kontaktanaloge Darstellung von Informationen in Abhängigkeit der Ausrichtung der Datenbrille, umfassend: Für mehrere Positionen einer Information, die kontaktanalog dargestellt werden soll, in der Anzeige der Datenbrille: Anzeigen einer Information, die kontaktanalog dargestellt werden soll, an der jeweiligen Position in der Anzeige der Datenbrille; Erfassen der Position des Kontaktes des Ohres und/oder Kopfes des Trägers mit dem Abschnitt der Datenbrille; Aufzeichnen der Position des Kontaktes des Ohres und/oder Kopfes des Trägers mit dem Abschnitt der Datenbrille. Aus den aufgezeichneten Positionen kann dann eine Zuordnung von Ausrichtungsbereichen zu Referenzpunkten erstellt werden.

In einem anderen Aspekt umfasst eine Vorrichtung eine Datenbrille, Mittel zum Bestimmen der Ausrichtung der Datenbrille in Bezug auf den Kopf eines Trägers der Datenbrille und elektronische Verarbeitungsmittel wobei die Datenbrille in verschiedenen Ausrichtungen verwendet wird, wobei die Vorrichtung dazu eingerichtet ist, eines der vorstehenden Verfahren auszuführen. Elektronische Verarbeitungsmittel können beispielsweise ein Mikrocontroller, ein Computer oder dedizierte Schaltkreise sein. Die Mittel zum Bestimmen der Ausrichtung der Datenbrille können die vorgenannten Sensoren im Bügel der Datenbrille sein. Die Vorrichtung kann Schnittstellen zu den Informationsquellen der Mehrzahl der Informationsquellen umfassen. Diese Schnittstellen können drahtgebunden oder drahtlos sein und geeignete Protokolle zum Datenaustausch umfassen. Derartige Schnittstellen und Protokolle sind im Stand der Technik bekannt.

In einem andern Aspekt umfasst ein Computerprogramm Anweisungen zum Ausführen eines der vorstehenden Verfahren. Das Computerprogramm kann dabei Anweisungen umfassen, die einen Computer bei Ausführung der Anweisungen zur Ausführung eines der vorstehenden Verfahren in der vorstehenden Vorrichtung veranlasst.

### KURZE BESCHREIBUNG DER ZEICHNUNGEN

Fig. 1 zeigt schematisch eine Datenbrille mit haibtransparenter Anzeige in einem peripheren Sichtfeld gemäß einem Ausführungsbeispiel.
Fig. 2a zeigt schematisch eine Datenbrille in einer ersten Ausrichtung gemäß einem Ausführungsbeispiel.
Fig. 2b zeigt schematisch eine Datenbrille in einer zweiten Ausrichtung gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

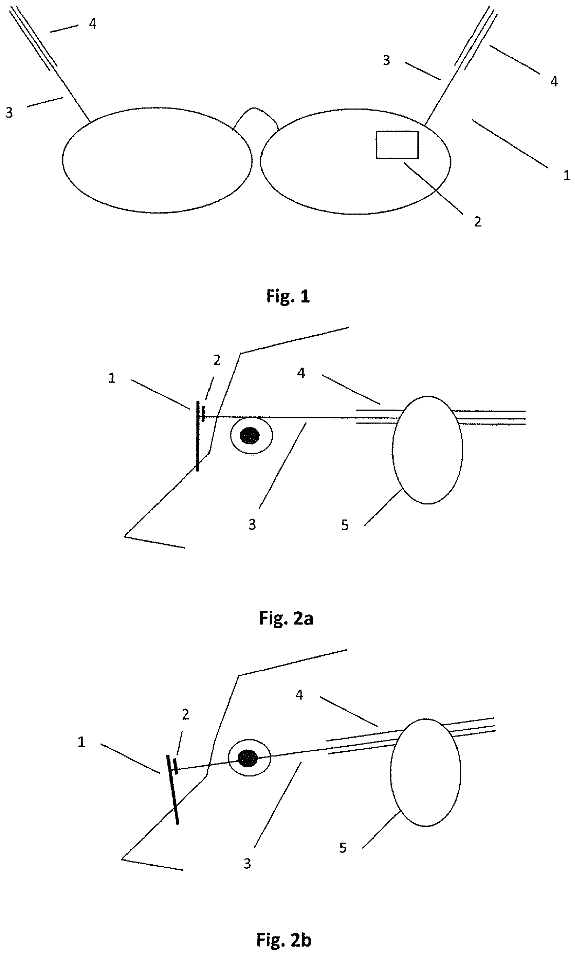

Fig. 1 zeigt schematisch eine Datenbrille 1 mit halbtransparenter Anzeige 2 in einem peripheren Sichtfeld gemäß einem Ausführungsbeispiel, Die Datenbrille 1 umfasst ferner zwei Bügel 3. An jedem Ende der Bügel 3 ist ein Abschnitt vorgesehen, der Sensoren 4 umfasst, die dazu ausgebildet sind, einen Kontakt mit einem Körper und dessen Stärke festzustellen. In der hier vorgeschlagenen Anwendung ist das Körperteil das Ohr 5 des Trägers, wie beispielsweise in Fig. 5 gezeigt. Um zwischen einem einfachen Anliegen des Sensors 4 am Kopf und einem Kontakt mit dem Ohr zu unterschieden kann die Stärke des erfassten Kontaktes berücksichtigt werden. Befindet sich der Sensor eingeklemmt zwischen Ohr und Kopf ist der Körperkontakt größer. Die Intensität des Körperkontakts lässt sich insbesondere über kapazitive Sensoren gut ermitteln. Die Sensoren 4 können zusätzlich elektronische Signalverarbeitungsmittel umfassen.

Fig. 2a zeigt schematisch eine Datenbrille 1 in einer ersten Ausrichtung gemäß einem Ausführungsbeispiel. Der Kopf des Trägers ist in Fig. 2a teilweise und in einer Seitenansicht dargestellt. Hier soll angenommen werden, dass das zentrale Sichtfeld des Trägers derart ist, dass die Anzeige 2 im peripheren Sichtfeld liegt. Die Datenbrille 1 ist in einer Ausrichtung in der Nähe der Nasenwurzel. Diese Position wird über die Sensoren 4 erkannt, die einen Körperkontakt mit dem Ohr in einem ersten Bereich feststellen. In dieser Position bietet sich keine kontaktanaloge Anzeige von Informationen an, da sie dem Träger in einem Bereich seines Sichtfeldes angezeigt würden, der für ihn keine großen Vorteile birgt. Folglich werden in der Anzeige 2 allgemeine Informationen eines Computers angezeigt wie die Uhrzeit und das Datum sowie ein abstraktes Piktogramm für einen Abbiegehinweis einer Routenführung.

Fig. 2b zeigt schematisch eine Datenbrille 2 in einer zweiten Ausrichtung gemäß einem Ausführungsbeispiel. Die Datenbrille 2 ist auf dem Nasenrücken weiter zur Nasenspitze hin verrückt. Diese neue Ausrichtung wird mittels der Sensoren 4 erkannt. Diese haben nun an einer Position mit dem Ohr Kontakt, die weiter in Richtung des freien Endes des Bügels liegt. Es wird somit festgestellt, dass der Kontakt in einem anderen Bereich des Sensors 4 stattfindet. Entsprechend einer Zuordnung des neuen Bereiches zu einer anderen Informationsquelle, beispielsweise einem Navigationssystem, das zur kontaktanalogen Darstellung vorgesehene Informationen bereitstellt, wird nun eine kontaktanaloge Darstellung vorgenommen. Dies kann beispielsweise die ortsrichtige Markierung der Straße einer unübersichtlichen Kreuzung sein, in die gemäß einer Routenführung einzubiegen ist.

## Patentansprüche

1. Verfahren zum Auswählen einer Informationsquelle aus einer Mehrzahl von Informationsquellen zur Anzeige der von der ausgewählten Informationsquelle bereitgestellten Informationen auf einer Anzeige einer Datenbrille (1), wobei die Datenbrille in verschiedenen Ausrichtungen verwendet wird, umfassend:
Bestimmen der Ausrichtung der Datenbrille (1) in Bezug auf den Kopf des Trägers der Datenbrille mithilfe von Mitteln (4) zum Bestimmen der Ausrichtung der Datenbrille in Bezug auf den Kopf des Trägers der Datenbrille;
Auswählen einer Informationsquelle aus der Mehrzahl von Informationsquellen zur Anzeige der von der ausgewählten Informationsquelle bereitgestellten Informationen abhängig von der bestimmten Ausrichtung der Datenbrille in Bezug auf den Kopf des Trägers der Datenbrille (1).

2. Verfahren nach Anspruch 1,
wobei die Datenbrille(1) einen Abschnitt (3) umfasst, der dazu ausgebildet ist, im Bereich eines Ohres (5) des Trägers mit dem Ohr und/oder dem Kopf des Trägers in Kontakt zu treten, insbesondere einen Brillenbügel, und wobei dieser Abschnitt der Datenbrille Sensoren (4) umfasst, die dazu ausgebildet sind, die relative Positionierung des Abschnitts zu einem Ohr (5) des Trägers zu erfassen,
wobei das Bestimmen der Ausrichtung der Datenbrille (1) umfasst:
Erfassen der relativen Positionierung des Abschnitts (3) der Datenbrille zu einem Ohr (5) des Trägers.

3. Verfahren nach Anspruch 2,
wobei die Sensoren (4) dazu ausgebildet sind, zu erfassen, an welcher Position der Abschnitt (3) und das Ohr (5) des Trägers in Kontakt sind,
wobei das Erfassen der relativen Positionierung des Abschnitts (3) der Datenbrille zu einem Ohr (5) des Trägers umfasst:
Erfassen, an welcher Position der Abschnitt (3) und das Ohr (5) des Trägers in Kontakt sind.

4. Verfahren nach einem der vorhergehenden Ansprüche, wobei das Auswählen einer Informationsquelle umfasst:
Bestimmen eines Ausrichtungsbereiches aus einer Mehrzahl an Ausrichtungsbereichen, in dem die bestimmte Ausrichtung der Datenbrille liegt,
Auswählen einer Informationsquelle aus der Mehrzahl der Informationsquellen anhand einer vorbestimmten Zuordnung zwischen den Ausrichtungsbereichen der Mehrzahl an Ausrichtungsbereichen und den Informationsquellen der Mehrzahl der Informationsquellen;
wobei jeder Ausrichtungsbereich aus der Mehrzahl an Ausrichtungsbereichen, mögliche Ausrichtungen der Datenbrille (1) in Bezug auf den Kopf des Trägers beschreibt, insbesondere Ausrichtungen, die bei einer Bewegung der Datenbrille (1) nacheinanderfolgend eingenommen werden.

5. Verfahren nach einem der vorhergehenden Ansprüche, wobei die Anzeige (2) der Datenbrille (1) für den Träger der Datenbrille (1) in einem ersten Ausrichtungsbereich der Datenbrille (1) in Bezug auf den Kopf des Trägers im Wesentlichen in einem peripheren Sichtfeld des Trägers angeordnet ist.

6. Verfahren nach Anspruch 5, wobei die Anzeige (2) der Datenbrille (1) für den Träger der Datenbrille (1) in einem zweiten Ausrichtungsbereich der Datenbrille (1) in Bezug auf den Kopf des Trägers zumindest mit einem signifikanten Teil in einem zentralen Sichtfeld des Trägers angeordnet ist.

7. Verfahren nach Anspruch 6, wobei die Mehrzahl an Informationsquellen eine erste Informationsquelle und eine zweite Informationsquelle umfasst, wobei die erste Informationsquelle erste Informationen bereitstellt, die nicht zur kontaktanalogen Darstellung vorgesehen sind, und wobei die zweite Informationsquelle zweite Informationen bereitstellt, die zur kontaktanalogen Darstellung vorgesehen sind, wobei das Verfahren ferner umfasst:
Bestimmen, ob die Datenbrille (1) in dem ersten oder dem zweiten Ausrichtungsbereich angeordnet ist;
Wenn die Datenbrille (1) in dem ersten Ausrichtungsbereich angeordnet ist: Darstellen der ersten Informationen auf nicht-kontaktanaloge Art;
Wenn die Datenbrille (1) in dem zweiten Ausrichtungsbereich angeordnet ist: Darstellen der zweiten Informationen auf kontaktanaloge Art.

8. Verfahren nach einem der Ansprüche 7, wobei die zweite Informationsquelle ein Fahrerassistenzsystem ist, das im Betrieb eine Markierung, insbesondere ein Symbol, ausgibt für einen anderen Verkehrsteilnehmer, mit dem eine Kollision droht, und die Position der Markierung in der Anzeige (2) der Datenbrille (1) ausgibt; und/oder wobei die zweite Informationsquelle im Betrieb die Markierung eines Fahrstreifens ausgibt, der aufgrund einer Routenführung befahren werden soll, und die entsprechende Position in der Anzeige (2) ausgibt; und/oder wobei die zweite Informationsquelle im Betrieb einen Point of Interest ausgibt und die entsprechende Position in der Anzeige (2) ausgibt.

9. Verfahren nach einem der vorhergehenden Ansprüche, wobei die Mehrzahl an Informationsquellen eine Informationsquelle umfasst, die Informationen bereitstellt, die zur kontaktanalogen Darstellung vorgesehen sind, ferner umfassend:
Bestimmen der Position in der Anzeige (2) der Datenbrille (1), an der die kontaktanalogen Informationen anzuzeigen sind, anhand der bestimmten Ausrichtung der Datenbrille (1), insbesondere unter Verwendung einer vorbestimmten Zuordnung zwischen Ausrichtungen der Datenbrille (1) und einer jeweiligen Referenzposition in der Anzeige (2) der Datenbrille (1).

10. Verfahren nach einem der Ansprüche 2 bis 9, ferner umfassend:
Ausführen einer Konfigurationssequenz für eine kontaktanaloge Darstellung von Informationen in Abhängigkeit der Ausrichtung der Datenbrille (1), umfassend:
Für mehrere Positionen einer Information, die kontaktanalog dargestellt werden soll, in der Anzeige (2) der Datenbrille (1):
Anzeigen einer Information, die kontaktanalog dargestellt werden soll, an der jeweiligen Position in der Anzeige (2) der Datenbrille (1);
Erfassen der Position des Kontaktes des Ohres (5) und/oder Kopfes des Trägers mit dem Abschnitt (3) der Datenbrille (1);
Aufzeichnen der Position des Kontaktes des Ohres (5) und/oder Kopfes des Trägers mit dem Abschnitt (3) der Datenbrille (1).

11. Vorrichtung, umfassend eine Datenbrille (1), Mittel (4) zum Bestimmen der Ausrichtung der Datenbrille in Bezug auf den Kopf eines Trägers der Datenbrille und elektronische Verarbeitungsmittel, wobei die Datenbrille in verschiedenen Ausrichtungen verwendet wird, wobei die Vorrichtung dazu eingerichtet ist, ein Verfahren nach einem der vorhergehenden Ansprüche auszuführen.

12. Computerprogramm, umfassend Anweisungen zum Ausführen eines Verfahrens nach einem der Ansprüche 1 bis 10, in einer Vorrichtung gemäß Anspruch 11.

## Claims

1. A method for selecting an information source from a plurality of information sources for displaying the information provided by the selected information source on a display of a pair of smartglasses (1), wherein the smartglasses are used in various orientations, said method comprising the following steps:
determining the orientation of the smartglasses (1) with respect to the head of the wearer of the smartglasses with the aid of means (4) for determining the orientation of the smartglasses with respect to the head of the wearer of the smartglasses;
selecting an information source from the plurality of information sources for displaying the information provided by the selected information source depending on the determined orientation of the smartglasses with respect to the head of the wearer of the smartglasses (1).

2. A method according to claim 1,
wherein the smartglasses (1) comprise a portion (3), more especially a side piece, which is designed to contact an ear and/orthe head of the wearer in the region of the ear (5) of the wearer, and wherein said portion of the smartglasses comprises sensors (4) which are configured to detect the relative positioning ofthe portion with respect to an ear(5) of the wearer, wherein determining the orientation of the smartglasses (1) comprises the following step:
detecting the relative positioning of the portion (3) of the smartglasses with respect to an ear (5) ofthe wearer.

3. A method according to claim 2,
wherein the sensors (4) are designed to detect the position at which the portion (3) and the ear(5) of the wearer are in contact,
wherein the detection of the relative positioning of the portion (3) of the smartglasses with respect to an ear (5) of the wearer comprises the following step:
detecting the position at which the portion (3) and the ear (5) of the wearer are in contact.

4. A method according to any one of the preceding claims, wherein the selection of an information source comprises the following steps:
determining an orientation region, from a plurality of orientation regions, in which the specific orientation of the smartglasses lies,
selecting an information source from the plurality of information sources on the basis of a predetermined pairing between the orientation regions of the plurality of orientation regions and the information sources of the plurality of information sources;
wherein each orientation region from the plurality of orientation regions describes possible orientations of the smartglasses (1) with respect to the head of the wearer, more especially orientations that are assumed successively as the smartglasses (1) move.

5. A method according to any one of the preceding claims, wherein the display (2) of the smartglasses (1) for the wearer of the smartglasses (1) is arranged substantially in a peripheral field of view of the wearer in a first orientation region of the smartglasses (1) with respect to the head of the wearer.

6. A method according to claim 5, wherein the display (2) of the smartglasses (1) for the wearer of the smartglasses (1) is arranged at least with a significant part in a central field of view of the wearer in a second orientation region of the smartglasses (1) with respect to the head of the wearer.

7. A method according to claim 6, wherein the plurality of information sources comprises a first information source and a second information source, wherein the first information source provides first information not intended for contact-analogue representation, and wherein the second information source provides second information intended for contact-analogue representation, wherein the method further comprises the following steps:
determining whether the smartglasses (1) are arranged in the first or the second orientation region;
if the smartglasses (1) are arranged in the first orientation region: representing the first information in a non-contact-analogue way;
if the smartglasses (1) are arranged in the second orientation region: representing the second information in a contact-analogue way.

8. A method according to claim 7, wherein the second information source is a driver assistance system which, during operation, outputs a marking, more especially a symbol, for another road user with whom there is a risk of collision, and outputs the position of the marking in the display (2) ofthe smartglasses (1);
and/or wherein the second information source, during operation, outputs the marking of a lane which is to be travelled on due to a route guidance, and outputs the corresponding position in the display (2);
and/or wherein the second information source outputs a point of interest during operation and outputs the corresponding position in the display (2).

9. A method according to any one of the preceding claims, wherein the plurality of information sources comprises an information source that provides information intended for contact-analogue representation, said method further comprising the following steps:
determining the position in the display (2) of the smartglasses (1) at which the contact-analogous information are to be displayed using the determined orientation of the smartglasses (1), more especially with use of a predetermined pairing between orientations of the smartglasses (1) and a corresponding reference position in the display (2) of the smartglasses (1).

10. A method according to any one of claims 2 to 9, further comprising:
executing a configuration sequence for a contact-analogue representation of information depending on the orientation of the smartglasses (1), comprising:
for a plurality of positions of an item of information which is intended for contact-analogue representation, in the display (2) of the smartglasses (1):
displaying an item of information which is intended for contact-analogue representation, at the particular position in the display (2) of the smartglasses (1);
detecting the position of the contact of the ear(5) and/or head of the wearer with the portion (3) of the smartglasses (1);
recording the position of the contact ofthe ear(5) and/or head ofthe wearer with the portion (3) ofthe smartglasses (1).

11. A device, comprising a pair of smartglasses (1), means (4) for determining the orientation of the smartglasses with respect to the head of a wearer of the smartglasses, and electronic processing means, wherein the smartglasses are used in various orientations, wherein the device is designed to carry out a method according to any one of the preceding claims.

12. A computer program, comprising instructions for carrying out a method according to any one of claims 1 to 10 in a device according to claim 11.

## Revendications

1. Procédé permettant de sélectionner une source d'information parmi un ensemble de sources d'information pour afficher les informations fournies par la source d'information choisie sur un affichage de lunettes intelligentes (1), les lunettes intelligentes étant utilisées dans différentes orientations, comprenant des étapes consistant à :
déterminer l'orientation des lunettes intelligentes (1) par rapport à la tête du porteur de ces lunettes à l'aide de moyens (4) permet ces tant de déterminer l'orientation des lunettes intelligentes par rapport à la tête du porteur de ces lunettes,
sélectionner une source d'information parmi l'ensemble de sources d'information pour afficher les informations fournies par la source d'informations choisie en fonction de l'orientation déterminée des lunettes intelligentes par rapport à la tête du porteur de ces lunettes (1).

2. Procédé conforme à la revendication 1,
selon lequel
les lunettes intelligentes (1) comportent un segment (3) en particulier une branche qui est réalisé pour venir en contact, dans la zone d'une oreille (5) du porteur des lunettes intelligentes, avec cette oreille et/ou la tête du porteur des lunettes intelligentes, ce segment des lunettes intelligentes comprenant des capteurs (4) qui sont réalisés pour détecter la position relative du segment par rapport à une oreille (5) du porteur des lunettes intelligentes,
la détermination de l'orientation des lunettes intelligentes (1) comprenant :
la détection de la position relative du segment (3) des lunettes intelligentes par rapport à une oreille (5) du porteur.

3. Procédé conforme à la revendication 2,
selon lequel
les capteurs (4) sont réalisés pour permettre de détecter dans quelle position le segment (3) et l'oreille (5) du porteur des lunettes intelligentes sont en contact,
la détection de la position relative du segment (3) des lunettes intelligentes par rapport à une oreille (5) du porteur comprenant :
la détection de la position dans laquelle le segment (3) et l'oreille (5) du porteur des lunettes intelligentes sont en contact.

4. Procédé conforme à l'une des revendications précédentes,
selon lequel
la sélection d'une source d'information comprend des étapes consistant à :
déterminer la zone d'orientation parmi un ensemble de zones d'orientation dans laquelle est située l'orientation déterminée des lunettes intelligentes,
choisir une source d'information parmi un ensemble de sources d'information à partir d'une association prédéterminée entre les zones d'orientation de l'ensemble de zones d'orientation et les sources d'information de l'ensemble de sources d'information,
chaque zone d'orientation parmi l'ensemble de zones d'orientation décrivant des orientations possibles des lunettes intelligentes (1) par rapport à la tête du porteur de ces lunettes intelligentes, en particulier des orientations qui lors d'un déplacement des lunettes intelligentes (1) sont successivement prises.

5. Procédé conforme à l'une des revendications précédentes,
selon lequel
l'affichage (2) des lunettes intelligentes (1) pour le porteur de ces lunettes intelligentes (1) est situé essentiellement dans le champ de vision périphérique de ce porteur des lunettes intelligentes, dans une première zone d'orientation des lunettes intelligentes (1) par rapport à la tête du porteur des lunettes intelligentes.

6. Procédé conforme à la revendication 5,
selon lequel
l'affichage (2) des lunettes intelligentes (1) pour le porteur de ces lunettes intelligentes (1) est situé au moins avec une partie significative dans le champ de vision central du porteur de ces lunettes intelligentes dans une seconde zone d'orientation des lunettes intelligentes (1) par rapport à la tête de l'utilisateur.

7. Procédé conforme à la revendication 6,
selon lequel
l'ensemble de sources d'information comprend une première source d'information et une seconde source d'information, la première source d'informations fournissant des premières informations qui ne sont pas prévues pour permettre une représentation analogique par contact, et la seconde source d'information fournissant des secondes informations qui sont prévues pour permettre une représentation analogique par contact, le procédé comprenant en outre des étapes consistant à :
déterminer si les lunettes intelligentes (1) sont situées dans la première zone d'orientation ou dans la seconde zone d'orientation,
lorsque les lunettes intelligentes (1) sont situées dans la première zone d'orientation, ne pas représenter les premières informations par analogie par contact,
lorsque les lunettes intelligentes (1) sont situées dans la seconde zone d'orientation, représenter les secondes informations par analogie par contact.

8. Procédé conforme à la revendication 7,
selon lequel
la seconde source d'information est un système d'assistance du conducteur qui délivre, en cours de fonctionnement, un marquage, en particulier un symbole pour un autre participant au trafic avec lequel une collision menace, et délivre la position du marquage sur l'affichage (2) des lunettes intelligentes (1), et/ou
la seconde source d'information délivre, en cours de fonctionnement, le marquage d'une bande de circulation qui, doit être empruntée en raison d'un guidage de trajet, et délivre la position correspondante sur l'affichage (2), et/ou la seconde source d'information délivre en cours de fonctionnement un point d'intérêt et délivre la position correspondante sur l'affichage (2).

9. Procédé conforme à l'une des revendications précédentes,
selon lequel
l'ensemble de sources d'information comporte une source d'information qui fournit des informations prévues pour permettre une représentation analogique par contact comprenant en outre des étapes consistant à :
déterminer la position dans l'affichage (2) des lunettes intelligentes (1) pour laquelle les informations analogiques par contact doivent être affichées en fonction de l'orientation déterminée des lunettes intelligentes (1), en particulier en utilisant une association prédéfinie entre des orientations des lunettes intelligentes (1) et une position de référence respective sur l'affichage (2) des lunettes intelligentes (1).

10. Procédé conforme à l'une des revendications 2 à 9,
comprenant en outre des étapes consistant à :
mettre en oeuvre une séquence de configuration pour permettre une représentation analogique par contact d'informations en fonction de l'orientation des lunettes intelligentes (1) selon laquelle :
pour plusieurs positions d'une information qui doit être représentée par analogie par contact, dans l'affichage (2) des lunettes intelligentes (1), on affiche une information devant représenter l'analogie par contact dans la position respective dans l'affichage (2) des lunettes (1),
on détecte la position du contact de l'oreille (5) et/ou de la tête de l'utilisateur avec le segment (3) des lunettes intelligentes (1),
on caractérise la position du contact de l'oreille (5) et/ou de la tête du porteur avec le segment (3) des lunettes intelligentes (1).

11. Dispositif comprenant des lunettes intelligentes (1), des moyens (4) permettant de déterminer l'orientation des lunettes intelligentes par rapport à la tête d'un porteur des lunettes intelligentes, et des moyens de traitement électronique, les lunettes intelligentes pouvant être utilisées dans différentes orientations, le dispositif étant réalisé pour permettre la mise en oeuvre d'un procédé conforme à l'une des revendications précédentes.

12. Programme d'ordinateur comprenant des instructions permettant la mise en oeuvre du procédé conforme à l'une des revendications 1 à 10 dans un dispositif conforme à la revendication 11.
